(19) Europäisches Patentamt
European Patent Office
Office européen des brevets

(11) **EP 1 971 073 A2**

(12) **EUROPEAN PATENT APPLICATION**

(43) Date of publication:
**17.09.2008 Bulletin 2008/38**

(51) Int Cl.:
*H04L 9/08* (2006.01)    *G06F 21/00* (2006.01)

(21) Application number: **07122532.0**

(22) Date of filing: **06.12.2007**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK RS**

(30) Priority: **14.03.2007 KR 20070025139**

(71) Applicant: **Samsung Electronics Co., Ltd.**
**Suwon-si,**
**Gyeonggi-do 442-742 (KR)**

(72) Inventors:
• **Kim, Myung-sun**
**Gyeonggi-do (KR)**
• **Ju, Hak-soo**
**Gyeonggi-do (KR)**
• **Moon, Ji-young**
**Gyeonggi-do (KR)**

(74) Representative: **Clark, David James**
**Appleyard Lees**
**15 Clare Road**
**Halifax**
**HX1 2HY (GB)**

(54) **Method and apparatus for conditionally decrypting content**

(57)    Provided is a method of conditionally decrypting content. In the method, whether a content key for encrypting and/or decrypting content is revoked is determined, and encrypted content is selectively decrypted using the content key.

## FIG. 3

**Description**

**BACKGROUND OF THE INVENTION**

1. Field of the Invention

Methods and apparatuses consistent with the present invention relate to conditionally decrypting content.

2. Description of the Related Art

Digital Rights Management (DRM) refers to digital copyright management for collectively supporting content production, distribution and management, e.g., securely protecting the right and benefit of content providers, preventing illegal copying, fee imposition, and approval of vicarious execution.

A related art technique of limiting the use of content using a key, which is a type of the DRM, will now be described.

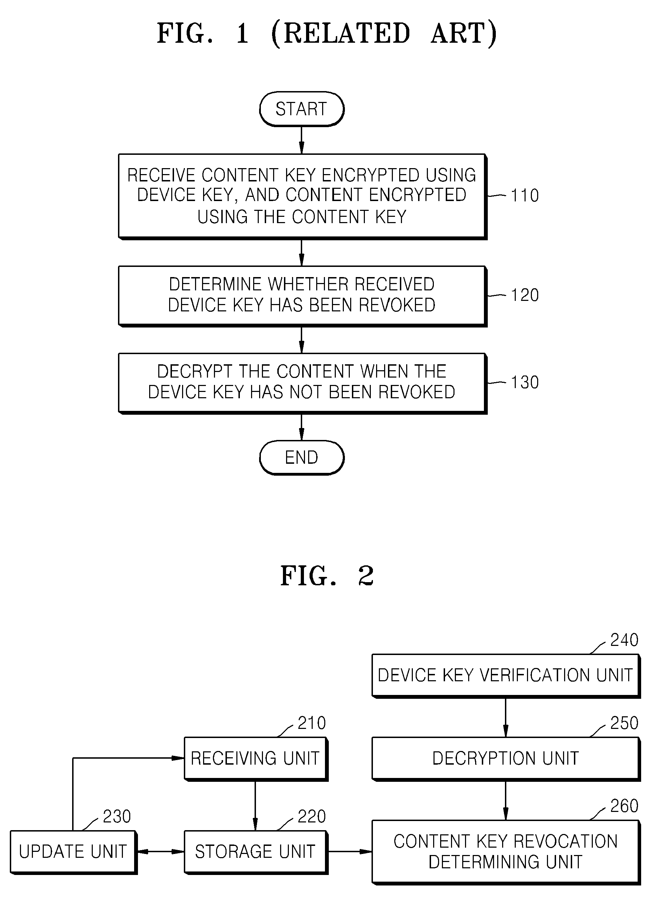

FIG. 1 is a flowchart illustrating a related art method of protecting content using a device key.

In operation 110, a content key that is encrypted using a device key, and content that is encrypted using the content key is received.

The device used to receive the encrypted content key and content may be any type of device, such as a personal computer (PC), an MP3 player, or a digital video disk (DVD) player, which is capable of decrypting and reproducing multimedia files.

The device is also capable of receiving a plurality of pieces of content, and retaining a plurality of device keys and a plurality of content keys. In this case, a plurality of content keys $K_{cn}$ can be encrypted using one device key $K_x$ as follows:

$$E[K_{x,}K_{cn}]_{(n=1....m)} \quad ... (1)$$

Referring to Equation (1), if m = 10, 10 content keys $K_{c1}$ through $K_{c10}$ can be encrypted using one device key $K_x$.

In operation 120, it is determined whether a received device key has been revoked.

In operation 130, if it is determined in operation 120 that the device key has not been revoked, the content is decrypted.

If it is determined in operation 120 that the device key has been revoked, the device discontinues decrypting all pieces of the content that were respectively encrypted, using the content keys that were encrypted using the revoked device key. In the above example, if it is determined that the device key $K_x$ has been revoked, decrypting of the 10 pieces of the content that were encrypted using the 10 content keys $K_{c1}$ through $K_{c10}$ is discontinued.

As described above, in the related art method of protecting content using a device key, all pieces of content cannot be used when a device key is revoked.

**SUMMARY OF THE INVENTION**

According to an aspect of the present invention, there is provided a method of conditionally decrypting content, the method including determining whether a content key for encrypting and/or decrypting content is revoked, and selectively decrypting encrypted content using the content key, based on the result of the determining.

The determining of whether the content key is revoked may include determining whether the content key is revoked by determining whether the content key belongs to a set of unrevoked content keys.

The determining of whether the content key is revoked may be based on a verification function that verifies whether the content key is revoked by using the content key and content key verification data for verifying whether the content key is revoked.

The content key verification data may be a set of data obtained by respectively encrypting a confirmation message by using a set of unrevoked content keys. The verification function may determine a content key as having not been revoked when the result of decrypting the encrypted data using the content key is identical to the confirmation message.

The method may further include receiving at least one of a set of unrevoked content keys, and content key verification data for verifying whether the content key is revoked.

The selective decrypting of the encrypted content may include decrypting the encrypted content using the content key when the content key is not revoked.

The method may further include further receiving a content key encrypted by using a device key, and content encrypted using the content key, and extracting the content key by decrypting the encrypted content key using a device key corresponding to the device key used to encrypt the content key.

The encrypted content key may be encrypted using a symmetrical key method, and the device key for decrypting, which corresponds to the device key used to encrypt the content key, may be the same as the device key used to encrypt the content key.

The encrypted content key may be encrypted using a public key method, and the device key for decrypting, which corresponds to the device key used to encrypt the content key, may be a secret key corresponding to a public key that is the device key used to encrypt the content key.

The method may further include determining the integrity and expiration time of the device key used to decrypt the encrypted content key, and whether the device key for decrypting corresponds to the device key for encrypting. The extracting of the content key may include selectively decrypting the encrypted content key, based on the result of the determining of the integrity and expiration time of the device key and whether the device key for decrypting corresponds to the device key for encrypting.

The extracting of the content key may include decrypting the encrypted content key using the device key corresponding to the device key for encrypting, when the integrity of the device key for decrypting is verified, the device key does not expire, and the device key for decrypting corresponds to the device key for encrypting.

The method may further include controlling use of the decrypted content based on a usage control rule of decrypted content, when the encrypted content is decrypted.

The method may further include updating at least one of a set of unrevoked content keys and content key verification data with latest information. The determining of whether the content key is revoked may be based on at least one of the updated set of the unrevoked content keys and the updated content key verification data.

The updating of at least one of a set of unrevoked content keys or content key verification data may include receiving a set of unrevoked content keys or content key verification data from a portable storage device or via a network, and performing the updating.

According to another aspect of the present invention, there is provided an apparatus for conditionally decrypting content, the apparatus including a content key revocation determining unit determining whether a content key for encrypting and/or decrypting content is revoked; and a decryption unit selectively decrypting encrypted content using the content key, based on the result of the determining.

The apparatus may further include a receiving unit receiving at least one of a set of unrevoked content keys and content key verification data for verifying whether the content key is revoked.

The apparatus may further include a device key verification unit determining the integrity and expiration time of the device key used to decrypt the content key and whether the device key for decrypting corresponds to the device key for encrypting, and the decryption unit selectively decrypts the encrypted content key based on the result of the determining.

The apparatus may further include an update unit updating at least one of the set of unrevoked content keys and the content key verification data with latest information. The content key revocation determining unit may determine whether the content key is revoked, based on at least one of the updated set of unrevoked content keys and the updated content key verification data.

The apparatus may further include a storage unit storing the set of unrevoked content keys or the content key verification data. The receiving unit may receive at least one of the set of unrevoked content keys and the content key verification data. The update unit may perform updating by storing in the storage unit latest information of the received set of unrevoked content keys or content key verification data, and the stored set of unrevoked content keys or content key verification data.

According to another aspect of the present invention, there is provided a computer readable medium having recorded thereon a program for executing a method of conditionally decrypting content, the method including determining whether a content key for encrypting and/or decrypting content is revoked, and selectively decrypting encrypted content using the content key, based on the result of the determining.

According to the present invention there is provided an apparatus and method as set forth in the appended claims. Other features of the invention will be apparent from the dependent claims, and the description which follows.

## BRIEF DESCRIPTION OF THE DRAWINGS

For a better understanding of the invention, and to show how embodiments of the same may be carried into effect, reference will now be made, by way of example, to the accompanying diagrammatic drawings in which:

FIG. 1 is a flowchart illustrating a related art method of protecting content using a device key;
FIG. 2 is a block diagram of an apparatus for conditionally decrypting content, according to an exemplary embodiment of the present invention; and
FIG. 3 is a flowchart illustrating a method of conditionally decrypting content, according to an exemplary embodiment of the present invention.

## DETAILED DESCRIPTION OF EXEMPLARY EMBODIMENTS OF THE INVENTION

The present invention will now be described more fully with reference to the accompanying drawings, in which exemplary embodiments of the invention are shown.

FIG. 2 is a block diagram of an apparatus for conditionally decrypting content ("the decryption apparatus"), according to an exemplary embodiment of the present invention. The decrypting apparatus includes a receiving unit 210, a storage unit 220, an update unit 230, a device key verification unit 240, a decryption unit 250 and a content key revocation determining unit 260.

The receiving unit 210 receives a content key encrypted using a device key and content encrypted using the content key, and a set of unrevoked content keys or content key verification data for verifying whether the content key has been revoked.

The receiving unit 210 may receive the above disclosed information from a portable storage device or via a network, as well as from a portable storage device or via a network, using one of broad-casting that is a point-to-multiple point transmission method, or narrowcasting that is a point-to-point transmission method.

If at least one of the set of the unrevoked content keys, the content key verification data, the content key encrypted using the device key, and the content encrypted using the content key has already been stored in the storage unit 220, the stored information may not be received. Thus, according to another exemplary embodiment, the receiving unit 220 may be omitted.

The set of the unrevoked content keys may be a set K of unrevoked content keys, as follows:

$$K=(K_{c1,}K_{c2,}K_{c3,}K_{c4}) \quad \dots (2)$$

As described further below in detail, the content key revocation determining unit 260 determines whether the content key has been revoked, by using the set of the unrevoked content keys.

For example, if a content key $K_{c5}$ exists, the content key revocation determining unit 260 determines the content key $K_{c5}$ as being revoked, since the content key $K_{c5}$ does not belong to the set K enclosed in Equation (2). However, the total number of the elements of the set K is not limited to 4, and any number of elements as would be understood by one skilled in the art at the time of the invention may be used.

The content key verification data may be a set S of a plurality of pieces of data each of which are obtained by encrypting a confirmation message using one of content keys that have not been revoked, as follows:

$$S=(a,b,c,d)$$
$$a=E[K_{c1,}'m']$$
$$b=E[K_{c2,}'m']$$
$$c=E[K_{c3,}'m']$$
$$d=E[K_{c4,}'m'] \quad \dots (3)$$

In Equation (3), m denotes the confirmation message. For example, the confirmation message may include content reading 'integrity' or 'being not revoked'. Also, the confirmation message may consist of video/audio files. However, the content key verification data is not limited to Equation (3), that is, it may be constructed in various ways.

A method of determining whether a content key has been revoked, by using the content key verification data, will be described below with reference to the content key revocation determining unit 260.

The storage unit 220 stores the set of unrevoked content keys or the content key verification data.

The storage unit 220 may further store the content key encrypted using the device key, and the content encrypted using the content key. However, according to another exemplary embodiment, the storage unit 220 may be omitted.

The update unit 230 updates at least one of the set of the unrevoked content keys and the content key verification data with the latest information.

For example, the update unit 230 may instruct that the receiving unit 210 receive a set of the unrevoked content keys or content key verification data. If the receiving unit 210 receives a set of new unrevoked content keys or new content key verification data, the update unit 230 may perform updating by storing in the storage unit 220 latest information from among the received set of the unrevoked content keys and content key verification data, and the stored set of the unrevoked content keys and content key verification data.

After the updating, the content key revocation determining unit 260 determines whether the content key is to be revoked, based on the set of the new unrevoked content keys or the new content key verification data stored in the storage unit 220.

For the updating, the update unit 230 may instruct that the receiving unit 210 substantially periodically receive a set of unrevoked content keys or content key verification data via a network, or instruct that when the decrypting apparatus is connected to a portable storage device, the receiving unit 210 receive a set of unrevoked content keys or content key verification data from the portable storage device.

A set of content keys or content key verification data stored in the portable storage device may be updated by substantially periodically connecting the portable storage device to a kiosk to download a set of latest unrevoked content keys or latest content key verification data.

The device key verification unit 240 verifies the integrity and expiration time of each device key used for decrypting, and whether a device key used for decrypting corresponds to a device key used for encrypting.

A content key may be selectively obtained according to the verification result of the device key verification unit 240. If the integrity of a device key is verified, the expiration time of the device key does not expire, and the device key used for decrypting corresponds to the device key used for encrypting, the decryption unit 250 can extract a content key by decrypting the encrypted content key by using a device key corresponding to the device key used for encrypting the content. However, in other cases, the decryption unit 250 does not decrypt encrypted content keys, and thus, the content key is not extracted.

If the content key has been encrypted using a symmetric key method, the decryption unit 250 decrypts the encrypted content key by using the device key used to encrypt the content key.

If the content key has been encrypted using a public key method, the decryption unit 250 decrypts the encrypted content key by using a secret key corresponding to a public key that is a device key used to encrypt the content key.

If the decryption unit 250 decrypts the encrypted content key and the content key is extracted, the content key revocation determining unit 260 determines whether the extracted content key has been revoked using the set of revoked content keys or the content key verification data.

If a content key belongs to the set of unrevoked content keys, the content key revocation determining unit 260 determines that the content key has not been revoked, but if the content key does not belong, the content key revocation determination unit 260 determines that the content key has been revoked.

The content key revocation determining unit 260 may determine whether the content key has been revoked, by using the content key verification data.

Equation (4) expresses a verification function for verifying the content key verification data S as shown in Equation (3), according to an exemplary embodiment.

$$f_n = D[K_c, S]_{(n=1...m)} \quad ... (4)$$

Equation (4) is a function of decrypting the set S of the data obtained by encrypting the confirmation message, using one of a plurality of content keys.

If Equation (4) is fully described with respect to the four elements of the set S of the data given by Equation (3), Equation (5) is obtained as follows:

$$f_1 = D[K_c, a]$$
$$f_2 = D[K_c, b]$$
$$f_3 = D[K_c, c]$$
$$f_4 = D[K_c, d] \quad ... (5)$$

The operation of the content key revocation determining unit 260 according to an exemplary embodiment will described with reference to Equation (5). First, the verification function decrypts data a, b, c, and d which were obtained by respectively encrypting a confirmation message using content keys $K_{c1}$, $K_{c2}$, $K_{c3}$, and $K_{c4}$, by using a content key $K_c$. The content key revocation determining unit 260 determines whether one of the results obtained by decrypting the data a, b, c, and d is identical to the confirmation message.

If one of the results of decrypting the data a, b, c, and d is identical to the confirmation message, the content key $K_c$ is determined as having not been revoked. If the result of decrypting the data a is substantially identical to the confirmation message, the content key $K_c$ used for decrypting the data a is determined to be substantially identical to the content key $K_{c1}$. Similarly, if the result of decrypting each of the data b, c, and d is substantially identical to the confirmation message, the content key $K_c$ is determined to be substantially identical to each of the content keys $K_{c2}$, $K_{c3}$, and $K_{c4}$.

For example, if the result of using a verification function $f_1$ is substantially identical to the confirmation message reading 'being not revoked', the content key $K_c$ is determined to be the content key $K_{c1}$ that has not been revoked.

However, if the result of decrypting each of the data a, b, c, and d is not substantially identical to the confirmation message, the content key $K_c$ is determined to have been revoked.

For example, if the confirmation message is a video/audio file, when a damaged audio file is obtained as the result of decrypting the confirmation message using a content key, the content key is determined to have been revoked.

The decryption unit 250 selectively decrypts the content that was encrypted using the content key, based on the determination result of the content key revocation determining unit 260.

That is, if it is determined that the content key has not been revoked, the decryption unit 250 decrypts the content using the encrypted content key, but if it is determined that the content key has been revoked, the decryption unit 250 discontinues decrypting the encrypted content using the content key.

In general, a content key for encrypting content and a content key for decrypting the content are the same to reduce the amount and cost of data processing. However, according to another exemplary embodiment, a content key for encrypting content may be different from a content key for decrypting the content.

An apparatus for conditionally decrypting content, according to an exemplary embodiment, may further include a content usage controller (not shown) that controls the use of content when content encrypted by the decryption unit 250 is decrypted, based on a usage control rule for decrypted content.

For example but not by way of limitation, the usage control rule may be that decrypted content can be reproduced only five times. In this case, the content usage controller prevents the number of times that the decrypted content is reproduced from exceeding 5.

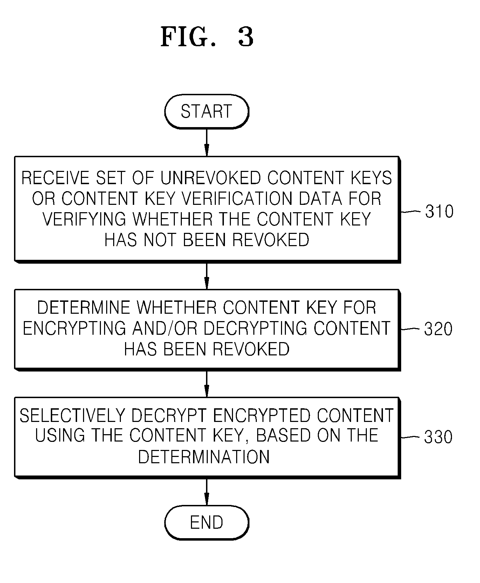

FIG. 3 is a flowchart illustrating a method of conditionally decrypting content, according to an exemplary embodiment.

In operation 310, a set of unrevoked content keys, or content key verification data for verifying whether a content key has not been revoked is received.

In this case, a content key encrypted using a device key, and content encrypted using the content key may further be received. However, as described above, according to another exemplary embodiment, operation 310 may be omitted without departing from the scope of these embodiments.

In operation 320, it is determined whether a content key for encrypting and/or decrypting the content has been revoked.

In this case, the set of unrevoked content keys or the content key verification data may be used to determine whether the content has been revoked.

In operation 330, the content encrypted using the content key is selectively decrypted based on the result of determination in operation 320.

That is, if the content key is determined to have been revoked, the encrypted content is not decrypted, but if the content key is determined to have not been revoked, the encrypted content is decrypted.

The above exemplary embodiments may be embodied as a computer program. Code and code segments of the computer program may be easily derived by computer programmers of ordinary skill in the art to which the present invention pertains. The computer program may be stored in a computer readable medium, and executed using a general digital computer. Examples of the computer-readable medium include a magnetic recording medium (a ROM, a floppy disk, a hard disc, etc.), and an optical recording medium (a CD ROM, a DVD, etc.), but are not limited thereto.

As described above, according to the exemplary embodiments, it is determined whether a content key for encrypting and/or decrypting content has been revoked, and encrypted content is selectively decrypted using the content key, based on the determination, thereby controlling access to the content in content units, instead of in units of devices.

Although a few preferred embodiments have been shown and described, it will be appreciated by those skilled in the art that various changes and modifications might be made without departing from the scope of the invention, as defined in the appended claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A method of conditionally decrypting content, the method comprising:

   determining whether a content key for encrypting or decrypting content is revoked (320); and selectively decrypting encrypted content using the content key, based on a result of the determining (330).

2. The method of claim 1, wherein the determining whether the content key is revoked (320) comprises determining whether the content key belongs to a set of unrevoked content keys.

3. The method of claim 1 or 2, wherein the determining whether the content key is revoked (320) is based on a verification function that verifies whether the content key is revoked by using the content key and content key verification data to verify whether the content key is revoked.

4. The method of claim 3, wherein the content key verification data includes a set of data obtained by respectively encrypting a confirmation message by using a set of unrevoked content keys, and the verification function determines a content key as having not been revoked if the result of decrypting the encrypted data using the content key is substantially identical to the confirmation message.

5. The method of any preceding claim, further comprising receiving at least one of a set of unrevoked content keys, and/or content key verification data that verifies whether the content key is revoked (310), wherein the receiving the at least one of the set of unrevoked content keys and the content key verification data is from a portable storage device or via a network.

6. The method of any preceding claim, wherein the selective decrypting of the encrypted content (330) comprises decrypting the encrypted content using the content key if it is determined that the content key is not revoked.

7. The method of any preceding claim, further comprising:

further receiving a content key encrypted by using a device key, and content encrypted using the content key; and
extracting the content key by decrypting the encrypted content key using a device key corresponding to the device key used to encrypt the content key.

8. The method of claim 7, wherein the encrypted content key is encrypted using a symmetrical key method, and the device key for decrypting, which corresponds to the device key used to encrypt the content key, is substantially the same as the device key used to encrypt the content key, or
wherein the encrypted content key is encrypted using a public key method, and the device key for decrypting, which corresponds to the device key used to encrypt the content key, is a secret key corresponding to a public key that is the device key used to encrypt the content key.

9. The method of claim 7, further comprising determining an integrity and an expiration time of the device key used to decrypt the encrypted content key, and whether the device key for decrypting corresponds to the device key for encrypting, and wherein the extracting the content key comprises decrypting the encrypted content key using the device key corresponding to the device key for encrypting, if the integrity of the device key for decrypting is verified, the device key does not expire, and the device key for decrypting corresponds to the device key for encrypting.

10. The method of any preceding claim, further comprising, if the encrypted content is decrypted, controlling use of the decrypted content based on a usage control rule of decrypted content.

11. The method of any preceding claim, further comprising updating at least one of a set of unrevoked content keys and content key verification data with latest information, and wherein the determining whether the content key is revoked is based on at least one of the updated set of the unrevoked content keys and the updated content key verification data.

12. An apparatus for conditionally decrypting content, the apparatus comprising:

a content key revocation determining unit (260) which determines whether a content key for encrypting or decrypting content is revoked; and
a decryption unit (250) which selectively decrypts encrypted content using the content key, based on a result of the determining by the content key revocation determining unit (260).

13. The apparatus of claim 12, wherein the content key revocation determining unit (260) determines whether the content key is revoked by determining whether the content key belongs to a set of unrevoked content keys.

14. The apparatus of claim 12 or 13, wherein the content key revocation determining unit (260) determines whether the content key is revoked, based on a verification function that determines whether the content key is revoked by using the content key and content key verification data for verifying whether the content key is revoked.

15. The apparatus of claim 14, wherein the content key verification data is a set of data obtained by respectively encrypting a confirmation message using the set of unrevoked content keys, and
the verification function determines that a content key is not revoked if the result of decrypting the encrypted data using the content key is substantially identical to the confirmation message.

16. The apparatus of any one of claims 12-15, further comprising a receiving unit (210) which receives at least one of a set of unrevoked content keys and content key verification data for verifying whether the content key is revoked, wherein the receiving unit (210) receives at least one of the set of the unrevoked content keys and the content key verification data from a portable storage device or via a network.

17. The apparatus of any one of claims 12-16, wherein, if the content key revocation determining unit (260) determines the content key is not revoked, the decryption unit decrypts the encrypted content using the content key.

18. The apparatus of claim 16, or claim 17 as dependent on claim 16, wherein the receiving unit further (210) receives a content key encrypted using a device key and content encrypted using the content key, and the decryption unit (250) extracts the content key by decrypting the encrypted content key using a device key corresponding to the device key used to encrypt the content key.

**19.** The apparatus of claim 18, wherein the encrypted content key is encrypted using a symmetrical key method, and the device key for decrypting, which corresponds to the device key used to encrypt the content key, is substantially the same as the device key used to encrypt the content key, or wherein the encrypted content key is encrypted using a public key method, and the device key for decrypting, which corresponds to the device key used to encrypt the content key, is a secret key corresponding to a public key that is the device key used to encrypt the content key.

**20.** The apparatus of claim 18 or 19, further comprising a device key verification unit (240) which determines an integrity and an expiration time of the device key used to decrypt the content key and whether the device key for decrypting corresponds to the device key for encrypting, and the decryption unit (250) decrypts the encrypted content key using the device key corresponding to the device key for encrypting, if the integrity of the device key for decrypting is verified, the expiration time of the device key does not expire, and the device key for decrypting corresponds to the device key for encrypting.

**21.** The apparatus of any one of claims 12-20, further comprising a content usage controller controlling use of the content based on a usage control rule of decrypted content, if the encrypted content is decrypted.

**22.** The apparatus of any one of claims 17-21 as dependent on claim 16, further comprising an update unit which updates at least one of the set of unrevoked content keys and the content key verification data with latest information, and wherein the content key revocation determining unit (260) determines whether the content key is revoked, based on at least one of the updated set of unrevoked content keys and the updated content key verification data.

**23.** The apparatus of claim 22, further comprising a storage unit (220) which stores the set of unrevoked content keys or the content key verification data, and wherein the receiving unit (210) receives at least one of the set of unrevoked content keys and the content key verification data, and the update unit (230) performs updating by storing in the storage unit latest information of the received set of unrevoked content keys or content key verification data, and the stored set of unrevoked content keys or content key verification data.

**24.** A computer readable medium having recorded thereon a program for executing the method of any one of claims 1-11.

# FIG. 1 (RELATED ART)

```
( START )
   |
   v
+------------------------------------------+
| RECEIVE CONTENT KEY ENCRYPTED USING      |
| DEVICE KEY, AND CONTENT ENCRYPTED        |---- 110
| USING THE CONTENT KEY                    |
+------------------------------------------+
   |
   v
+------------------------------------------+
| DETERMINE WHETHER RECEIVED               |
| DEVICE KEY HAS BEEN REVOKED              |---- 120
+------------------------------------------+
   |
   v
+------------------------------------------+
| DECRYPT THE CONTENT WHEN THE             |
| DEVICE KEY HAS NOT BEEN REVOKED          |---- 130
+------------------------------------------+
   |
   v
( END )
```

# FIG. 2

```
                                    +----------------------------+
                                    | DEVICE KEY VERIFICATION UNIT |-- 240
                                    +----------------------------+
                                              |
                                              v
        +----------------+          +----------------------------+
        | RECEIVING UNIT |-- 210    | DECRYPTION UNIT            |-- 250
        +----------------+          +----------------------------+
              |                               |
              v                               v
+-------------+   +----------------+  +----------------------------+
| UPDATE UNIT |<--| STORAGE UNIT   |->| CONTENT KEY REVOCATION    |-- 260
|         230 |   |           220  |  | DETERMINING UNIT          |
+-------------+   +----------------+  +----------------------------+
```

# FIG. 3

```
        ( START )
            |
            v
+---------------------------------+
| RECEIVE SET OF UNREVOKED CONTENT KEYS |
| OR CONTENT KEY VERIFICATION DATA FOR  |—— 310
| VERIFYING WHETHER THE CONTENT KEY     |
|       HAS NOT BEEN REVOKED            |
+---------------------------------+
            |
            v
+---------------------------------+
| DETERMINE WHETHER CONTENT KEY FOR     |
| ENCRYPTING AND/OR DECRYPTING CONTENT  |—— 320
|        HAS BEEN REVOKED               |
+---------------------------------+
            |
            v
+---------------------------------+
| SELECTIVELY DECRYPT ENCRYPTED CONTENT |
| USING THE CONTENT KEY, BASED ON THE   |—— 330
|          DETERMINATION                |
+---------------------------------+
            |
            v
         ( END )
```